(19) **Europäisches Patentamt / European Patent Office / Office européen des brevets**

(11) **EP 4 560 361 A1**

(12) **EUROPEAN PATENT APPLICATION**
published in accordance with Art. 153(4) EPC

(43) Date of publication:
**28.05.2025 Bulletin 2025/22**

(21) Application number: **22951831.1**

(22) Date of filing: **14.12.2022**

(51) International Patent Classification (IPC):
*G01V 1/28* (2006.01)

(52) Cooperative Patent Classification (CPC):
**G01V 1/28; G01V 1/30**

(86) International application number:
**PCT/CN2022/138933**

(87) International publication number:
**WO 2024/016574 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.07.2022 CN 202210848031**

(71) Applicants:
• **China National Petroleum Corporation**
**Beijing 100007 (CN)**
• **BGP Inc., China National Petroleum Corporation**
**Hebei 072751 (CN)**
• **CNPC Exploration Software Co., Ltd**
**Beijing 100080 (CN)**

(72) Inventors:
• **LI, Xiang**
**Baoding, Hebei 072751 (CN)**
• **ZHOU, Zhengzheng**
**Baoding, Hebei 072751 (CN)**
• **SONG, Jiawen**
**Baoding, Hebei 072751 (CN)**
• **CHEN, Feng**
**Baoding, Hebei 072751 (CN)**
• **DUAN, Lian**
**Baoding, Hebei 072751 (CN)**
• **HE, Huili**
**Baoding, Hebei 072751 (CN)**

(74) Representative: **Vossius & Partner**
**Patentanwälte Rechtsanwälte mbB**
**Siebertstrasse 3**
**81675 München (DE)**

(54) **METHOD AND APPARATUS FOR DETERMINING SPEED OF SUBSURFACE MEDIUM, AND DEVICE**

(57)    A method for determining velocity of a subsurface medium includes: acquiring, by an ocean bottom node, seismic data generated by exciting a monopole source at a shot point (101); determining a dipole source and a zero-phase monopole source according to the monopole source, and combining the dipole source and the zero-phase monopole source to obtain a directional sub-wave (102); exchanging the position of the ocean bottom node with the position of the shot point and, acquiring, by the exchanged node, seismic synthetic data generated by exciting the directional sub-wave at the exchanged shot point (103); and determining a target velocity model according to an up going wavefield of the seismic data and the seismic synthetic data (104). By processing the monopole source and obtaining the directional sub-wave having a directional feature, acquiring the seismic synthetic data generated by exciting the directional sub-wave at the shot point, and determining the velocity model by the seismic synthetic data and an up going wavefield of the seismic data, the precision of the velocity model is improved. Further provided are an apparatus for determining the velocity of a subsurface medium, an electronic device, a computer-readable storage medium, and a program product.

Acquiring, by an ocean bottom node, seismic data generated by exciting a monopole source at a shot point, where the monopole source omnidirectionally radiates energy equally at an excitation moment — 101

Determining a dipole source and a zero-phase monopole source according to the monopole source; and combining the dipole source and the zero-phase monopole source to obtain a directional sub-wave — 102

Exchanging a position of the ocean bottom node and a position of the shot point; and acquiring, by the exchanged ocean bottom node, seismic synthetic data generated by exciting the directional sub-wave at the exchanged shot point — 103

Determining a target velocity model according to an up going wavefield of the seismic data and the seismic synthetic data, where the target velocity model is used to characterize a propagation velocity of a seismic wave in the subsurface medium, and the up going wavefield represents the seismic data acquired from the ocean bottom node — 104

FIG. 1

EP 4 560 361 A1

## Description

The present application claims priority to Chinese Patent Application No. 202210848031.7 filed with China National Intellectual Property Administration on July 19, 2022 and entitled "METHOD AND APPARATUS FOR DETERMINING VELOCITY OF SUBSURFACE MEDIUM, AND DEVICE", which is hereby incorporated by reference in its entirety.

## TECHNICAL FIELD

The present invention relates to seismic data processing technology, in particular to a method and an apparatus for determining velocity of subsurface medium, and a device.

## BACKGROUND

Seismic data collection by ocean bottom node (OBN) is a marine seismic acquisition technology that has appeared in recent years. OBN is a multi-component seismograph which is laid on the seabed and may independently acquire and record seismic signals. OBN may receive the directional information of seismic data. A velocity model of subsurface medium may be determined using the OBN data. The velocity model is then utilized to image the seismic data. The higher the accuracy of the velocity model, the higher the imaging quality of the seismic data.

In the prior art, a monopole source may be excited at a shot point, and seismic data may be acquired using OBN. Then, based on the reciprocity theorem, the positions of the shot point and OBN are exchanged, and a monopole source is excited at the exchanged shot point, and seismic synthetic data is acquired by using the exchanged OBN. Then, by using the up going wavefield of the seismic data and seismic synthetic data and based on the full waveform inversion (FWI) algorithm, the velocity model of the subsurface medium is determined. However, the accuracy of the velocity model obtained by the above method needs to be further improved.

## SUMMARY

In view of the above problems, the present invention provides a method and an apparatus for determining velocity of subsurface medium, and a device.

In a first aspect, the present invention provides a method for determining velocity of subsurface medium, including: acquiring, by an ocean bottom node, seismic data generated by exciting a monopole source at a shot point, where the monopole source omnidirectionally radiates energy equally at an excitation moment; determining a dipole source and a zero-phase monopole source according to the monopole source; combining the dipole source and the zero-phase monopole source to obtain a directional sub-wave; exchanging a position of the ocean bottom node with a position of the shot point; and acquiring, by using the exchanged ocean bottom node, seismic synthetic data generated by exciting the directional sub-wave at the exchanged shot point; and determining a target velocity model according to the seismic synthetic data and an up going wavefield of the seismic data; where the target velocity model is used to characterize a propagation velocity of a seismic wave in the subsurface medium, and the up going wavefield represents seismic data acquired from the ocean bottom node. In other optional implementations, the determining read-only permission result includes: determining the read-only permission result based on a register provided by a fast table, page table, or other memory management mechanism, where the register provided by the fast table, page table, or other memory management mechanism store various permission results for memory pages or memory regions.

In other optional implementations, the method further includes: determining a first derivative parameter of the monopole source with respect to a vertical direction, and using the first derivative parameter as the dipole source; and determining a second derivative parameter of the monopole source with respect to time, and using the second derivative parameter as the zero-phase monopole source.

In other optional implementations, the method further includes: repeating the following process until a residual between the up going wavefield and the seismic synthetic data is less than a first preset threshold or number of iterations reaches a second preset threshold: based on a current velocity model, acquiring, by the exchanged ocean bottom node, seismic synthetic data generated by exciting the directional sub-wave at the exchanged shot point; determining the residual between the up going wavefield and the seismic synthetic data according to the up going wavefield and the seismic synthetic data; determining a search direction parameter and a search step length parameter of the current velocity model according to the residual; updating the current velocity model according to the search direction parameter, the search step length parameter and the current velocity model; where a model obtained when the residual is less than the first preset threshold or the number of iterations reaches the second preset threshold is the target velocity model.

In other optional implementations, the method further includes: the monopole source is a seismic longitudinal sub-wave.

In other optional implementations, the method further includes: displaying the target velocity model to enable a user to check the propagation velocity of the seismic wave in the subsurface medium.

In a second aspect, the present invention provides an apparatus for determining velocity of subsurface medium, including: an observation data acquisition unit, configured to acquire by an ocean bottom node seismic data generated by exciting a monopole source at a shot point; where the monopole source omnidirectionally radiates energy equally at an excitation moment; a sub-wave determination unit, configured to determine a dipole source and a zero-phase monopole source according to the monopole source; combining the dipole source and the zero-phase monopole source to obtain a directional sub-wave; a synthetic data acquisition unit, configured to exchange a position of the ocean bottom node with a position of the shot point; and acquiring, by the exchanged ocean bottom node, seismic synthetic data generated by exciting the directional sub-wave at the exchanged shot point; and a velocity determination unit, configured to determine a target velocity model according to the seismic synthetic data and an up going wavefield of the seismic data; where the target velocity model is used to characterize a propagation velocity of a seismic wave in the subsurface medium, and the up going wavefield represents seismic data acquired from the ocean bottom node.

In other optional implementations, the apparatus further includes: the sub-wave determination unit is specifically configured to: determine a first derivative parameter of the monopole source with respect to a vertical direction, using the first derivative parameter as the dipole source; and determining a second derivative parameter of the monopole source with respect to time, using the second derivative parameter as the zero-phase monopole source.

In a third aspect, the present invention provides an electronic device, including: at least one processor and a memory;

the memory stores computer executable instructions; the at least one processor executes the computer executable instructions stored in the memory, causing the at least one processor performs any one of the methods according to the first aspect.

In a fourth aspect, the present invention provides a computer readable storage medium, the computer readable storage medium stores computer executable instructions, which, when executed by a processor, implements any one of the methods according to the first aspect.

In a fifth aspect, the present invention provides a computer program product, includes a computer program, which, when executed by a processor, implements any one of the methods according to the first aspect.

The method and apparatus for determining velocity of subsurface medium, and the device, as provided by the present invention involve acquiring, by an ocean bottom node, seismic data generated by exciting a monopole source at a shot point where the monopole source omnidirectionally radiates energy equally at an excitation moment; determining a dipole source and a zero-phase monopole source according to the monopole source; combining the dipole source and the zero-phase monopole source to obtain a directional sub-wave; exchanging a position of the ocean bottom node with a position of the shot point; and acquiring by using the exchanged ocean bottom node seismic synthetic data generated by exciting the directional sub-wave at the exchanged shot point; and determining a target velocity model according to an up going wavefield of the seismic data and the seismic synthetic data, where the target velocity model is used to characterize a propagation velocity of a seismic wave in the subsurface medium, and the up going wavefield represents seismic data acquired from the ocean bottom node. That is, the embodiments of the present invention may process the monopole source and obtain the directional sub-wave with a directional feature, acquire, by using an ocean bottom node, seismic data generated by exciting the directional sub-wave at a shot point, and determine the velocity model using the seismic synthetic data and the up going wavefield separated from the acquired seismic data. In this way, the accuracy of the obtained velocity model may be improved.

## BRIEF DESCRIPTION OF DRAWINGS

FIG. 1 is a flowchart of a method for determining velocity of subsurface medium according to the present invention.
FIG. 2 is a wavefield snapshot created by a monopole source according to the present invention.
FIG. 3 is a wavefield snapshot created by a dipole source according to the present invention.
FIG. 4 is a wavefield snapshot created by a directional sub-wave according to the present invention.
FIG. 5 is a schematic diagram of up and down going wavefields of seismic data according to the present invention.
FIG. 6 is a schematic diagram of an up going wavefield recording and a down going wavefield recording of seismic data according to the present invention.
FIG. 7 is a schematic diagram of a wavefield recording generated by exciting a monopole source at an exchanged shot point according to the present invention.
FIG. 8 is a schematic diagram of a wavefield recording generated by exciting a directional sub-wave at an exchanged shot point according to the present invention.
FIG. 9 is a flowchart of another method for determining velocity of subsurface medium according to the present invention.
FIG. 10 is a schematic diagram of a first velocity model when simulating seismic data and an initial velocity model when simulating seismic synthetic data according to the present invention.
FIG. 11 is a schematic diagram of velocity models obtained from a monopole source and a directional sub-wave respectively according to the present invention.
FIG. 12 is a schematic structural diagram of an apparatus for determining velocity of subsurface medium according to the present invention.

FIG. 13 is a schematic structural diagram of an electronic device according to the present invention.

## DESCRIPTION OF EMBODIMENTS

To make the objectives, technical solutions, and advantages of embodiments of the present invention clearer, the following clearly and comprehensively describes the technical solutions in embodiments of the present invention with reference to the accompanying drawings in examples of the present invention.

Seismic data acquisition by ocean bottom node (OBN) is a marine seismic acquisition technology that has appeared in recent years. OBN is a multi-component seismograph which is laid on the seabed and may independently collect and record seismic signals. OBN receives the directional information of seismic data. The velocity model of subsurface medium may be determined from OBN data. The velocity model is mainly used to image the seismic data. The higher the accuracy of the obtained velocity model, the higher the imaging quality of the seismic data. In the prior art, a monopole source may be excited at a shot point, and seismic data may be acquired using OBN. Then, based on the reciprocity theorem, the positions of the shot point and OBN are exchanged, and the monopole source is excited at the exchanged shot point, and the seismic synthetic data is acquired by the exchanged OBN. OBN receives the directional information of the seismic data, so that the acquired seismic data may be separated into an up going wavefield and a down going wavefield. Since the down going wavefield undergoes a reflection from the free surface of seawater, the down going wavefield has a smaller offset when penetrating the stratum compared to the up going wavefield. Therefore, a velocity model of the subsurface medium is usually determined by using the up going wavefield of the seismic data and synthetic data and based on the full waveform inversion (FWI) algorithm. However, the accuracy of the velocity model obtained by the above method needs to be further improved.

In view of the above problem, the technical concept of the present invention is: acquiring, by using an ocean bottom node, seismic synthetic data generated by exciting a directional sub-wave with a directional feature at a shot point, and determining a velocity model by using the seismic synthetic data and an up going wavefield separated from the acquired seismic data. In this way, the accuracy of the velocity model is improved.

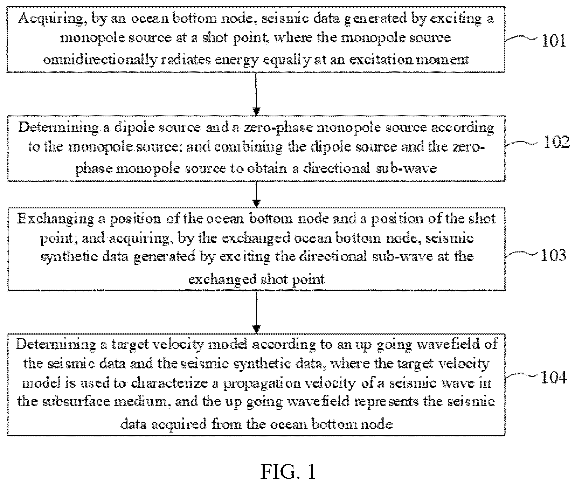

In a first aspect, an embodiment of the present invention provides a method for determining velocity of subsurface medium, and FIG. 1 is a flowchart of a method for determining velocity of subsurface medium according to the present invention.

As shown in FIG. 1, the method for determining velocity of subsurface medium includes steps below.

Step 101, acquiring, by an ocean bottom node, seismic data generated by exciting a monopole source at a shot point, where the monopole source omnidirectionally radiates energy equally at an excitation moment.

Where the method provided by the present invention may be executed by an electronic device with computing capability, such as computer and other devices. The electronic device may obtain the seismic data acquired using the ocean bottom node.

Specifically, shot points may be set at a plurality of positions on sea level, ocean bottom nodes may be set at a plurality of positions of seabed, monopole sources may be sequentially excited at the shot points and seismic data may be acquired by the ocean bottom nodes.

Where seismic data is a seismic wave generated by excitation of the monopole source.

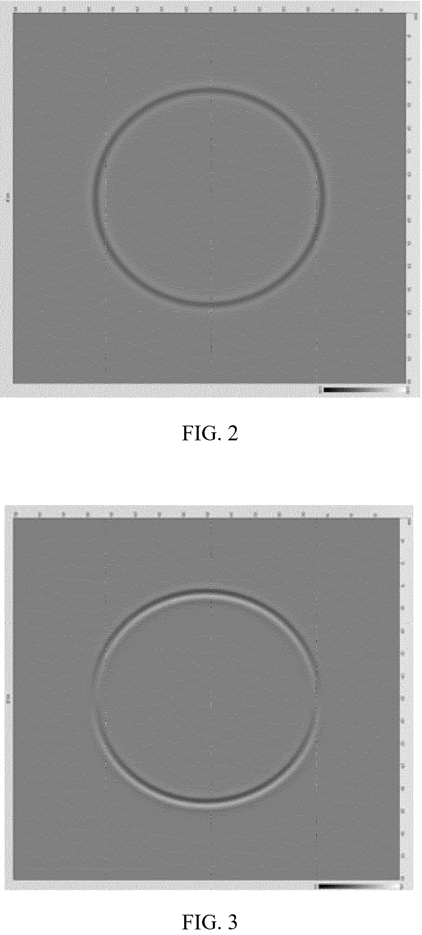

Where the monopole source omnidirectionally radiates energy equally at an excitation moment. FIG. 2 shows a wavefield snapshot created by a monopole source, where both horizontal and vertical coordinates represent positions.

Step 102, determining a dipole source and a zero-phase monopole source according to the monopole source; and combining the dipole source and the zero-phase monopole source to obtain a directional sub-wave.

Specifically, the monopole source may be processed to obtain the dipole source. FIG. 3 shows a wavefield snapshot created by a dipole source, where both horizontal and vertical coordinates represent positions. The dipole source is characterized by enhanced longitudinal radiation energy and weakened transversal radiation energy.

Specifically, the monopole source may be processed to obtain the zero-phase monopole source.

Specifically, the obtained dipole source and the obtained zero-phase monopole source may be combined to obtain the directional sub-wave.

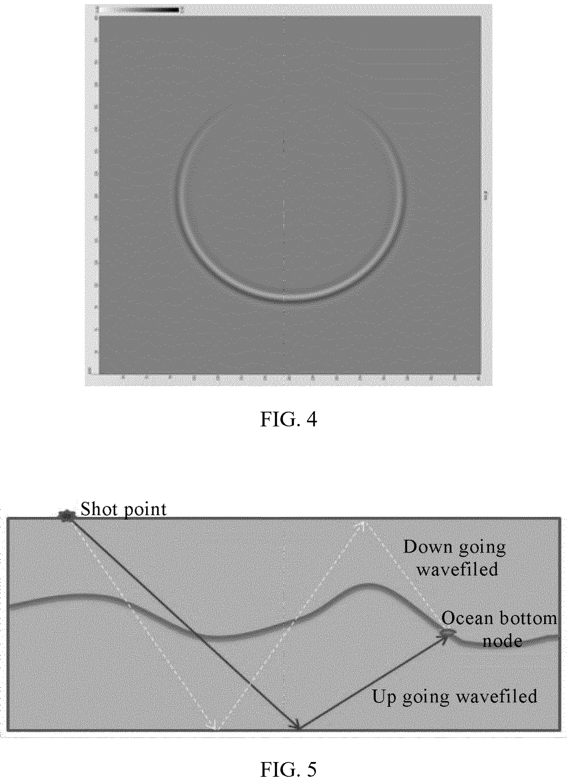

For example, the dipole source and the zero-phase monopole source may be added to obtain the directional sub-wave. FIG. 4 shows a wavefield snapshot created by a directional sub-wave obtained by adding the dipole source and the zero-phase monopole source, where both horizontal and vertical coordinates represent positions. The directional sub-wave has the directional characteristic that the downward radiation energy is enhanced and the upward radiation energy is eliminated. By using this characteristic, the up going wavefield or down going wavefield in seismic data may be better matched.

Step 103, exchanging a position of the ocean bottom node and a position of the shot point; and acquiring, by the exchanged ocean bottom node, seismic synthetic data generated by exciting the directional sub-wave at the exchanged shot point.

Specifically, the position of the ocean bottom node and the position of the shot point may be exchanged according to the reciprocity theorem. Simulation software may be used to simulate a plurality of exchanged shot points and a plurality of exchanged ocean bottom nodes. Further, exciting the directional sub-waves in sequence at the plurality of exchanged shot points is simulated, and seismic synthetic data is acquired by using the plurality of exchanged ocean bottom nodes, that is, the seismic synthetic data acquired at sea surface, which is generated by excitation of the directional sub-wave at a position of the shot point of ocean bottom. For example, the simulation software may be GeoEast software.

Where GeoEast is a unified data platform, a unified display platform, a unified development platform and an integrated software system that can dynamically assemble the system for seismic data processing and interpretation.

Step 104, determining a target velocity model according to an up going wavefield of the seismic data and the seismic synthetic data, where the target velocity model is used to characterize a propagation velocity of a seismic wave in the subsurface medium, and the up going wavefield represents the seismic data acquired from the ocean bottom node.

Specifically, as shown in FIG. 5, the shot point is distributed on the sea surface, and the ocean bottom node is distributed under the sea surface. Seismic data generated by exciting a seismic source at a shot point is acquired by using an ocean bottom node. The seismic data includes an up going wavefield and a down going wavefield. As shown by the dotted path in FIG. 5, the seismic data reflected by the sea surface and acquired above the ocean bottom node is the down going wavefield of the seismic data. Where the down going wavefield may be expressed as $d(x, t_i)$, where x represents a position of shot point, $t_i$ represents a sampling time, i represents a sampling sequence of ocean bottom node, i = 1, 2, 3 ... n, where n is a total sampling number of single channel data. Where the single channel data refers to sampling data of the ocean bottom node for one shot point.

Similarly, as shown by the solid path in FIG. 5, the seismic data without being reflected by the sea surface and acquired below the ocean bottom node is the up going wavefield of the seismic data. Where the up going wavefield may be expressed as $u(x, t_i)$, where x represents a position of shot point, $t_i$ represents a sampling time, i represents a sampling sequence of ocean bottom node, i = 1, 2, 3 ... n, where n is a total sampling number of single channel data. Where the single channel data refers to sampling data of the ocean bottom node for one shot point.

Specifically, GeoEast software may be used to separate the up going wavefield from the seismic data.

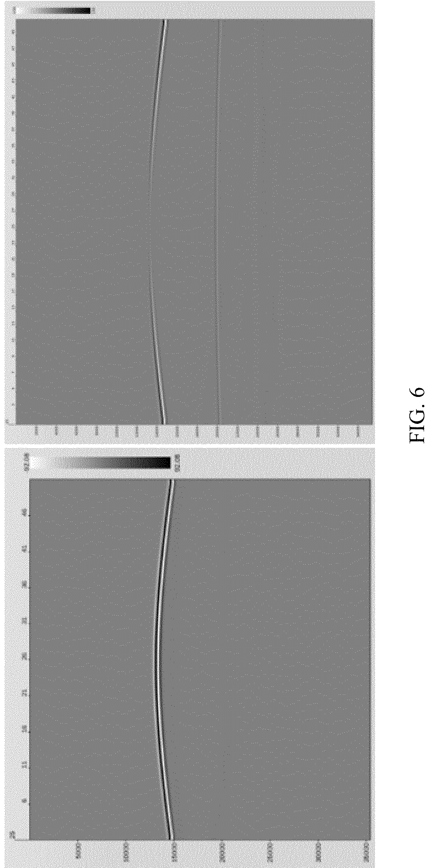

Specifically, the left figure of FIG. 6 shows a wavefield recording of an up going wavefield of seismic data, where the horizontal coordinate represents the a position of shot point and the vertical coordinate represents a sampling time of ocean bottom node. Similarly, the right figure of FIG. 6 shows a wavefield recording of a down going wavefield of seismic data, where the horizontal coordinate represents a position of shot point and the vertical coordinate represents a sampling time of ocean bottom node.

Specifically, FWI may be performed by using the up going wavefield of the seismic data and the seismic synthetic data, thereby obtaining a target velocity model of the propagation velocity of the seismic wave in the subsurface medium.

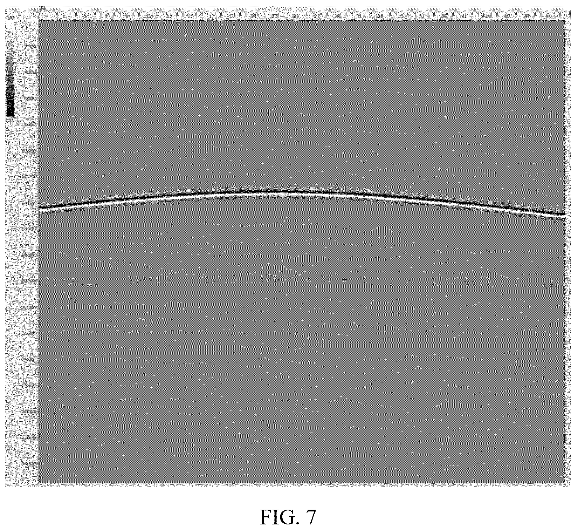

FIG. 7 shows a wavefield recording generated by exciting a monopole source at an exchanged shot point

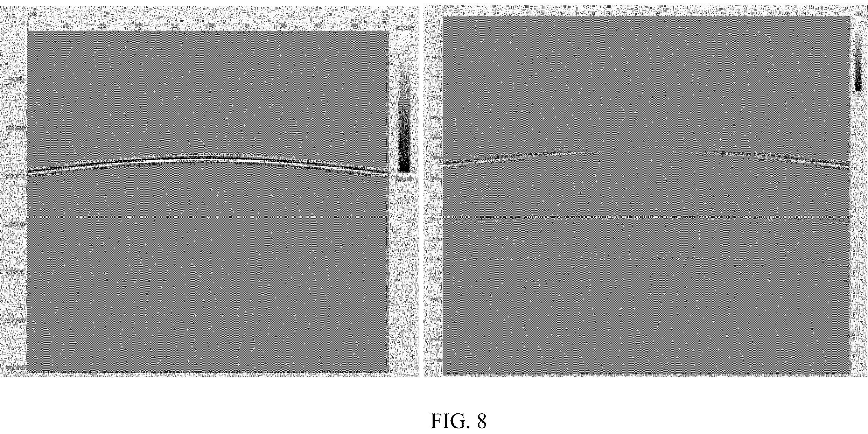

The left figure of FIG. 8 shows a wavefield recording generated by exciting a directional sub-wave at an exchanged shot point, where the directional sub-wave is obtained by adding the dipole source and the zero-phase monopole source, and where the horizontal coordinate represents a position of the exchanged shot point, the vertical coordinate represents a sampling time of the ocean bottom node.

The right figure of FIG. 8 shows a wavefield recording generated by exciting a directional sub-wave at an exchanged shot point, where the directional sub-wave is obtained by subtracting the zero-phase monopole source from the dipole source, and where the horizontal coordinate represents a position of the exchanged shot point, and the vertical coordinate represents a sampling time of the ocean bottom node. Specifically, the present solution may obtain the directional sub-wave by combining the zero-phase monopole source and the dipole source. By comparing FIG. 6, FIG. 7, and FIG. 8, it can be known that simulating the up and down going wavefields individually by using the directional sub-wave as a seismic source may better match the up and down going wavefields recordings than the monopole source.

After obtaining the target velocity model, since the target model characterizes the propagation velocity of the seismic wave in the subsurface medium, the target velocity model may be displayed to facilitate the user to check the propagation velocity of the seismic wave in the subsurface medium. An electronic device may automatically conduct oil and gas exploration according to the target speed model. A user may conduct oil and gas exploration manually according to the target velocity model.

After obtaining the target velocity model, a seismic data image may be generated according to the target velocity model and the seismic data, and then the oil and gas exploration may be conducted automatically or manually according to the seismic data image. The higher the accuracy of the velocity model, the higher the quality of the generated seismic data image, which is more conducive to the oil and gas exploration.

The method for determining velocity of subsurface medium provided by the embodiments of the present invention involves acquiring by an ocean bottom node, seismic data generated by exciting a monopole source at a shot point, where the monopole source omnidirectionally radiates energy equally at an excitation moment; determining a dipole source and a zero-phase monopole source according to the monopole source;

combining the dipole source and the zero-phase monopole source to obtain a directional sub-wave; exchanging a position of the ocean bottom node with a position of the shot point; acquiring by using the exchanged ocean bottom node seismic synthetic data generated by exciting the directional sub-wave at the exchanged shot point; determining a target velocity model according to an up going wavefield of the seismic data and the seismic synthetic data, where the target velocity model is used to characterize a propagation velocity of a seismic wave in the subsurface medium and the up going wavefield represents seismic data acquired from the ocean bottom node. The embodiments of the present invention may process the monopole source and obtain the directional sub-wave with a directional feature, acquire by using an ocean bottom node seismic synthetic data generated by exciting the directional sub-wave at a shot point, and use the seismic synthetic data and an up going wavefield separated from the acquired seismic data to determine a velocity model. In this way, the accuracy of the velocity model may be improved.

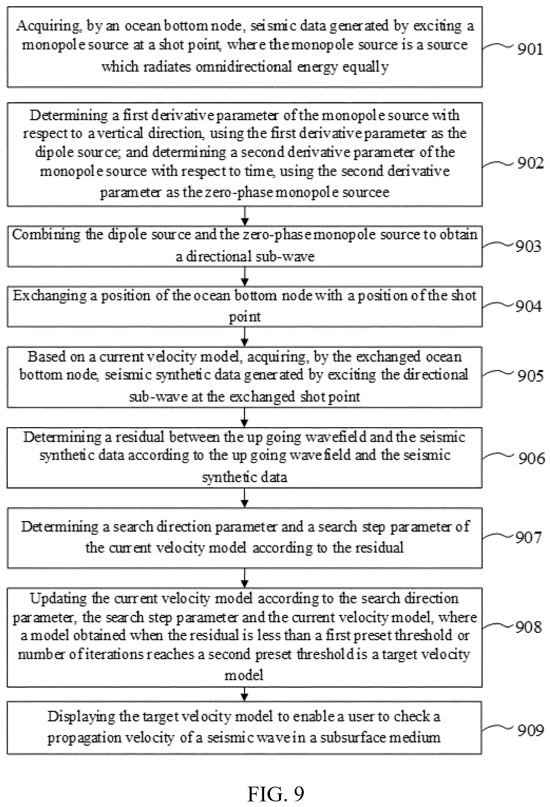

In combination with the foregoing implementations, FIG. 9 is a flowchart of another method for determining velocity of subsurface medium provided by the present invention. As shown in FIG. 9, the method for determining velocity of subsurface medium includes steps below.

Step 901, acquiring, by an ocean bottom node, seismic data generated by exciting a monopole source at a shot point, where the monopole source omnidirectionally radiates energy equally at an excitation moment.

Specifically, the principle and implementation of step 901 are similar to those of step 101, and the details are not repeated here.

In an implementation, the monopole source is a seismic longitudinal sub-wave.

Step 902, determining a first derivative parameter of the monopole source with respect to a vertical direction, using the first derivative parameter as the dipole source; and determining a second derivative parameter of the monopole source with respect to time, using the second derivative parameter as the zero-phase monopole source.

Specifically, the equation for the first derivative parameter of the monopole source with respect to the vertical direction is as follows:

$$f(\acute{x_0}) = \frac{f(x_0 + iz) - f(x_0)}{iz}$$

where f represents a wavefield generated by the monopole source, $x_0$ represents a position of the wavefield generated by the monopole source, iz represents an increment in z direction, and the z direction represents a vertical direction.

Specifically, the first derivative parameter may be used as the dipole source.

Specifically, the equation for the second derivative parameter of the monopole source with respect to time is as follows:

$$f_t(\acute{x_0}) = \frac{f(x_0 + it) - f(x_0)}{it}$$

where f represents a wavefield generated by the monopole source, $x_0$ represents a position of the wavefield generated by the monopole source, and it represents an increment in time t.

Specifically, the second derivative parameter may be used as the zero-phase monopole source.

Step 903, combining the dipole source and the zero-phase monopole source to obtain a directional sub-wave.

Specifically, the present solution does not limit the way of combination of dipole source and the zero-phase monopole source. For example, it is possible to add the dipole source and the zero-phase monopole source; or for them, it is possible to subtract the zero-phase monopole source from the dipole source.

Specifically, the present solution is to obtain the zero-phase monopole source and the dipole source according to a conventional monopole source, which may not only obtain seismic sources with the same and different energy in different directions in space, but also combine two kinds of sub-waves to form a new sub-wave, thus enriching the selection of sub-waves in OBN FWI.

Step 904, exchanging a position of the ocean bottom node with a position of the shot point.

Specifically, the position of the ocean bottom node and the position of the shot point may be exchanged according to the reciprocity theorem.

The following process is repeated until a residual between the up going wavefield and the seismic synthetic data is less than a first preset threshold or number of iterations is larger than a second preset threshold:

Step 905, based on a current velocity model, acquiring, by the exchanged ocean bottom node, seismic synthetic data generated by exciting the directional sub-wave at the exchanged shot point.

Specifically, a simulation model may be established by using simulation software according to the current velocity model, and a plurality of the exchanged shot points and a plurality of the exchanged ocean bottom nodes may be simulated in the simulation model.

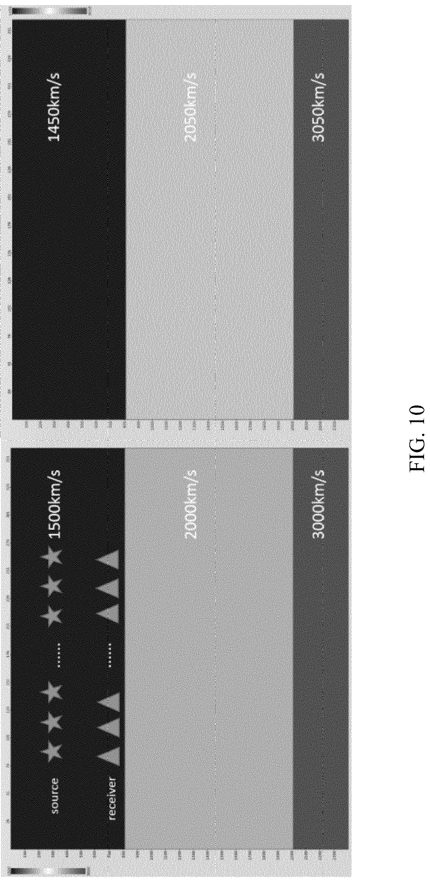

Specifically, in first repetition process, the current velocity model may be a preset initial velocity model. The initial velocity model is a velocity model that is preset based on an actual situation. For example, if the seismic data is obtained by simulating using simulation software, the seismic data may be based on a first velocity model as shown in the left figure of FIG. 10. The first velocity model may be smoothed to obtain an initial velocity model. The obtained initial velocity model is as shown in the right figure of FIG. 10. In the velocity model, both the horizontal and vertical coordinates represent a position.

Specifically, simulation software is used to simulate sequential excitation of the directional sub-waves at a plurality of the exchanged shot points, and the plurality of the exchanged ocean bottom nodes are used to acquire synthetic data.

Step 906, determining a residual between the up going wavefield and the seismic synthetic data according to the up going wavefield and the seismic synthetic data.

Specifically, FWI may be performed using the up going wavefield of the seismic data and the seismic synthetic data.

Firstly, an objective function is constructed according to the up going wavefield of the seismic data and the seismic synthetic data, thereby determining the residual between the up going wavefield of the seismic data and the seismic synthetic data.

Where the equation of the constructed objective function is as follows:

$$\min\emptyset(m) = \rho(D - F(m))$$

where minø(m) represents the residual between the up going wavefield of the seismic data and the seismic synthetic data, m represents a current velocity model, $\rho$ represents an expression of the objective function, D represents the up going wavefield of the seismic data, and F(m) represents the seismic synthetic data obtained based on the current velocity model.

Step 907, determining a search direction parameter and a search step length parameter of the current velocity model according to the residual.

Specifically, by taking derivatives of the velocity based on the constructed objective function, the gradient of the current velocity model may be obtained, thereby the search direction parameter and the search step length parameter of the current velocity model may be obtained.

Step 908, updating the current velocity model according to the search direction parameter, the search step length parameter and the current velocity model, where a model obtained when the residual is less than a first preset threshold or number of iterations reaches a second preset threshold is the target velocity model.

Specifically, an update function may be constructed based on the search direction parameter, the search step length parameter, and the current velocity model to update the current velocity model. The update function is as follows:

$$m_{k+1} = m_k + \alpha_k s_k$$

where $m_k$ represents the current velocity model, $\alpha_k$ represents the search direction parameter of the current velocity model, $s_k$ represents the search step length parameter of the current velocity model, and $m_{k+1}$ represents the updated velocity model.

Specifically, if it is determined that the residual between the up going wavefield of the seismic data and the seismic synthetic data is larger than the first preset threshold and do not reach the second preset threshold number of iterations, the updated velocity model would be used as the current velocity model of the next repetition process, to continue performing step 705 until it is determined that the residual is less than the first preset threshold or the number of iterations reaches the second preset threshold, then, the repetition process is ended and the velocity model obtained at this time is determined as the target velocity model.

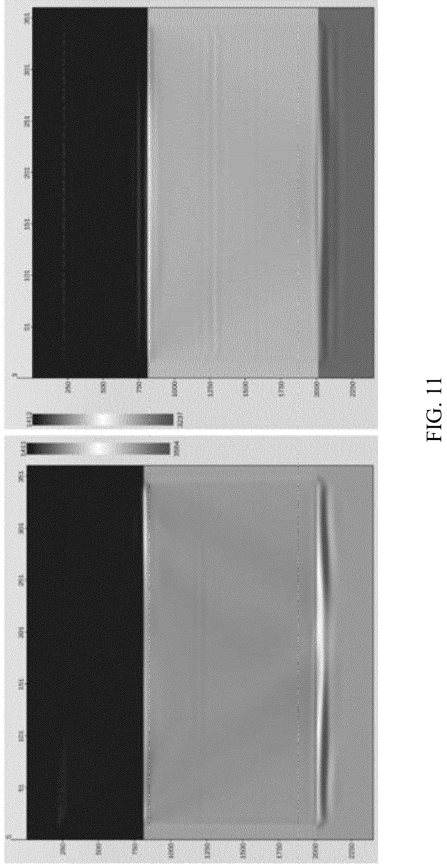

Specifically, the right figure of FIG. 11 shows a target velocity model obtained by inversion according to collected seismic synthetic data generated by exciting a directional sub-wave, where the horizontal coordinate represents a spatial position, the vertical coordinate represents a seawater depth, and different colors represent different velocity values.

Specifically, the left figure of FIG. 11 shows a velocity model obtained according to collected seismic synthetic data generated by exciting a monopole source, where the horizontal coordinate represents a spatial position, the vertical coordinate represents a seawater depth, and different colors represent different velocity values.

Specifically, by comparing the collected seismic synthetic data generated by exciting the monopole source and the collected seismic synthetic data generated by exciting the directional sub-wave, a large number of multiple waves exist in the seismic synthetic data acquired by exciting the monopole source.

By comparing the left and right figures in FIG. 10, it can be seen that the inversion result obtained according to the directional sub-wave shows a more accurate result on the velocity interface.

Specifically, the present solution uses the reciprocity theorem to exchange the position of sea surface shot points with ocean bottom nodes in OBN data to perform FWI inversion of the directional sub-wave. It is possible to separately invert up going wavefield data, to obtain a more accurate update amount of the velocity model compared to the monopole source FWI and thus obtain a more accurate velocity model.

Step 909, displaying the target velocity model to enable a user to check the propagation velocity of the seismic wave in the subsurface medium.

Specifically, the target velocity model may be displayed by simulation software to enable the user to check the propagation velocity of the seismic wave in the subsurface medium.

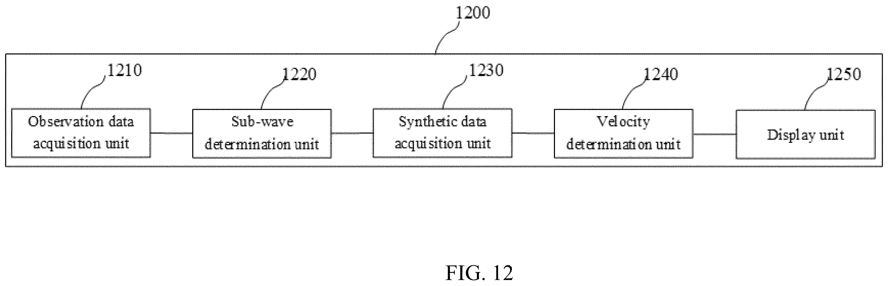

**In** a second aspect, the present invention exemplarily provides an apparatus for determining velocity of subsurface medium. FIG. 12 is a schematic structural diagram of an apparatus for determining velocity of subsurface medium according to the present invention. As shown in FIG. 12, the apparatus for determining velocity of subsurface medium 1200 includes:

an observation data acquisition unit 1210, configured to acquire by an ocean bottom node seismic data generated by exciting a monopole source at a shot point, where the monopole seismic source omnidirectionally radiates energy equally at an excitation moment;

a sub-wave determination unit 1220, configured to determine a dipole source and a zero-phase monopole source according to the monopole source, and combining the dipole source and the zero-phase monopole source to obtain a directional sub-wave;

a synthetic data acquisition unit 1230, configured to exchange a position of the ocean bottom node with a position of the shot point, and acquire by the exchanged ocean bottom node seismic synthetic data generated by exciting the directional sub-wave at the exchanged shot point; and

a velocity determination unit 1240, configured to determine a target velocity model according to the seismic synthetic data and an up going wavefield of the seismic data, where the target velocity model is used to characterize a propagation velocity of a seismic wave in the subsurface medium, and the up going wavefield represents the seismic data acquired from the ocean bottom node.

The sub-wave determination unit 1220 is specifically configured to determine a first derivative parameter of the monopole source with respect to a vertical direction, using the first derivative parameter as the dipole source; and

determine a second derivative parameter of the monopole source with respect to time, using the second derivative parameter as the zero-phase monopole source.

The velocity determination unit 1240 is specifically configured to repeat the following process until a residual between the up going wavefield and the seismic synthetic data is less than a first preset threshold or number of iterations reaches a second preset threshold:

based on a current velocity model, acquiring, by the exchanged ocean bottom node, seismic synthetic data generated by exciting the directional sub-wave at the exchanged shot point;

determining the residual between the up going wavefield and the seismic synthetic data according to the up going wavefield and the seismic synthetic data;

determining a search direction parameter and a search step length parameter of the current velocity model according to the residual; and

updating the current velocity model according to the search direction parameter, the search step length parameter and the current velocity model;

where a model obtained when the residual is less than the first preset threshold or the number of iterations reaches the second preset threshold is the target velocity model.

In an implementation, the monopole source is a seismic longitudinal sub-wave.

The apparatus for determining velocity of subsurface medium 1200 further includes a display unit 1250 for displaying the target velocity model to enable a user to check the propagation velocity of the seismic wave in the subsurface medium.

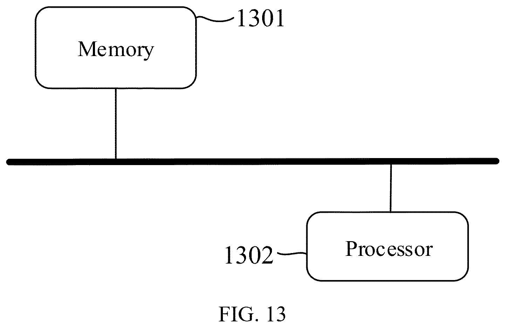

In a third aspect, the present invention exemplarily provides an electronic device. FIG. 13 is a schematic structural diagram of hardware of an electronic device provided by the present invention. As shown in FIG. 13, the electronic device includes:

a memory 1301;
a processor 1302; and
a computer program;
where the computer program is stored in the memory 1301 and configured to be executed by the processor 1302 to implement any one of the foregoing methods for determining velocity of subsurface medium.

In a fourth aspect, the present invention further provides a computer readable storage medium, where the computer readable storage medium stores a computer program, which, when executed by a processor, implements any one of the foregoing methods for determining velocity of subsurface medium.

In a fifth aspect, the present invention further provides a computer program product, including a computer program, which, when executed by a processor, implements any one of the foregoing methods for determining velocity of subsurface medium.

It may be understand by those skilled in the art: all or some of the steps for implementing the foregoing method embodiments may be completed through hardware related to program instructions. The foregoing program may be stored in a computer readable storage medium. When the program is executed, it includes executing the steps of the foregoing method embodiments. The foregoing storage medium includes various medium that may store program codes, such as ROM, RAM, magnetic disks, or optical disks.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some or all technical features therein; and these modifications or substitutions do not make the essence of the corresponding technical solutions depart from the scope of the technical solutions of various embodiments of the present invention.

## Claims

1. A method for determining velocity of subsurface medium, comprising:

acquiring, by an ocean bottom node, seismic data generated by exciting a monopole source at a shot point, wherein the monopole source omnidirectionally radiates energy equally at an excitation moment;
determining a dipole source and a zero-phase monopole source according to the monopole source, and combining the dipole source and the zero-phase monopole source to obtain a directional sub-wave;
exchanging a position of the ocean bottom node with a position of the shot point, and acquiring, by the exchanged ocean bottom node, seismic synthetic data generated by exciting the directional sub-wave at the exchanged shot point; and
determining a target velocity model according to an up going wavefield of the seismic data and the seismic synthetic data, wherein the target velocity model is used to characterize a propagation velocity of a seismic wave in the subsurface medium, and the up going wavefield represents seismic data acquired from the ocean bottom node.

2. The method according to claim 1, wherein determining the dipole source and the zero-phase monopole source according to the monopole source comprises:

determining a first derivative parameter of the monopole source with respect to a vertical direction, using the first derivative parameter as the dipole source; and
determining a second derivative parameter of the monopole source with respect to time, using the second derivative parameter as the zero-phase monopole source.

3. The method according to claim 1, wherein acquiring, by the exchanged ocean bottom node, the seismic synthetic data generated by exciting the directional sub-wave at the exchanged shot point and determining the target velocity model according to the up going wavefield of the seismic data and the seismic synthetic data, comprises:

repeating the following process until a residual between the up going wavefield and the seismic synthetic data is less than a first preset threshold or number of iterations reaches a second preset threshold:

based on a current velocity model, acquiring, by the exchanged ocean bottom node, the seismic synthetic data generated by exciting the directional sub-wave at the exchanged shot point;
determining the residual between the up going wavefield and the seismic synthetic data according to the up going wavefield and the seismic synthetic data;
determining a search direction parameter and a search step length parameter of the current velocity model according to the residual; and
updating the current velocity model according to the search direction parameter, the search step length parameter and the current velocity model;
wherein a model obtained when the residual is less than the first preset threshold or the number of iterations reaches the second preset threshold is the target velocity model.

4. The method according to any one of claims 1-3, wherein the monopole source is a seismic longitudinal sub-wave.

5. The method according to any one of claims 1-3, wherein the method further comprises:
displaying the target velocity model to enable a user to check the propagation velocity of the seismic wave in the subsurface medium.

6. An apparatus for determining velocity of subsurface medium, comprising:

an observation data acquisition unit , configured to acquire by an ocean bottom node seismic data generated by exciting a monopole source at a shot point, wherein the monopole source omnidirectionally radiates energy equally at an excitation moment;
a sub-wave determination unit, configured to determine a dipole source and a zero-phase monopole source according to the monopole source, and combine the dipole source and the zero-phase monopole source to obtain a directional sub-wave;
a synthetic data acquisition unit, configured to exchange a position of the ocean bottom node with a position of the shot point, and acquire, by the exchanged ocean bottom node, seismic synthetic data generated by exciting the directional sub-wave at the exchanged shot point; and
a velocity determination unit, configured to determine a target velocity model according to an up going wavefield of the seismic data and the seismic synthetic data, wherein the target velocity model is used to characterize a propagation velocity of a seismic wave in the subsurface medium, and the up going wavefield represents seismic data acquired from the ocean bottom node.

7. The apparatus according to claim 6, wherein the sub-wave determination unit is specifically configured to:

determine a first derivative parameter of the monopole source with respect to a vertical direction, using the first derivative parameter as the dipole source; and
determine a second derivative parameter of the monopole source with respect to time, using the second derivative parameter as the zero-phase monopole source.

8. An electronic device, comprising a processor and a memory, wherein

the memory is configured to store a computer program; and
the processor is configured to read the computer program stored in the memory, and execute the method according to any one of claims 1-5 according to the computer program stored in the memory.

9. A computer readable storage medium, wherein the computer readable storage medium stores computer executable instructions, which, when executed by a processor, implements the method according to any one of claims 1-5.

10. A computer program product, comprising a computer program, which, when executed by a processor, implements the method according to any one of claims 1-5.

Acquiring, by an ocean bottom node, seismic data generated by exciting a monopole source at a shot point, where the monopole source omnidirectionally radiates energy equally at an excitation moment ⟞~ 101

Determining a dipole source and a zero-phase monopole source according to the monopole source; and combining the dipole source and the zero-phase monopole source to obtain a directional sub-wave ⟞~ 102

Exchanging a position of the ocean bottom node and a position of the shot point; and acquiring, by the exchanged ocean bottom node, seismic synthetic data generated by exciting the directional sub-wave at the exchanged shot point ⟞~103

Determining a target velocity model according to an up going wavefield of the seismic data and the seismic synthetic data, where the target velocity model is used to characterize a propagation velocity of a seismic wave in the subsurface medium, and the up going wavefield represents the seismic data acquired from the ocean bottom node ⟞~104

FIG. 1

EP 4 560 361 A1

FIG. 2

FIG. 3

12

FIG. 4

FIG. 5

FIG. 6

FIG. 7

FIG. 8

Acquiring, by an ocean bottom node, seismic data generated by exciting a monopole source at a shot point, where the monopole source is a source which radiates omnidirectional energy equally ⌐ 901

Determining a first derivative parameter of the monopole source with respect to a vertical direction, using the first derivative parameter as the dipole source; and determining a second derivative parameter of the monopole source with respect to time, using the second derivative parameter as the zero-phase monopole sourcee ⌐ 902

Combining the dipole source and the zero-phase monopole source to obtain a directional sub-wave ⌐ 903

Exchanging a position of the ocean bottom node with a position of the shot point ⌐ 904

Based on a current velocity model, acquiring, by the exchanged ocean bottom node, seismic synthetic data generated by exciting the directional sub-wave at the exchanged shot point ⌐ 905

Determining a residual between the up going wavefield and the seismic synthetic data according to the up going wavefield and the seismic synthetic data ⌐ 906

Determining a search direction parameter and a search step parameter of the current velocity model according to the residual ⌐ 907

Updating the current velocity model according to the search direction parameter, the search step parameter and the current velocity model, where a model obtained when the residual is less than a first preset threshold or number of iterations reaches a second preset threshold is a target velocity model ⌐ 908

Displaying the target velocity model to enable a user to check a propagation velocity of a seismic wave in a subsurface medium ⌐ 909

FIG. 9

FIG. 10

FIG. 11

FIG. 12

FIG. 13

## INTERNATIONAL SEARCH REPORT

| International application No. |
| --- |
| **PCT/CN2022/138933** |

| A. | CLASSIFICATION OF SUBJECT MATTER |
| --- | --- |

G01V 1/28(2006.01)i

According to International Patent Classification (IPC) or to both national classification and IPC

| B. | FIELDS SEARCHED |
| --- | --- |

Minimum documentation searched (classification system followed by classification symbols)

G01V1

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 海底节点, 偶极子震源, 单级子震源, 单极子震源, 方向性子波, 组合, 上行波, 地下介质, 速度, 全波形反演, OBN, OBC, OBS, FWI, zero-phase, dipole, subsea, medium, velocity, upgoing wavefield, full wave inversion

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 111781639 A (TONGJI UNIVERSITY) 16 October 2020 (2020-10-16) description, paragraphs 0007-0023 | 1-10 |
| A | CN 108345031 A (JILIN UNIVERSITY) 31 July 2018 (2018-07-31) entire document | 1-10 |
| A | CN 112255685 A (GUANGZHOU MARINE GEOLOGICAL SURVEY et al.) 22 January 2021 (2021-01-22) entire document | 1-10 |
| A | CN 113740901 A (CHINA NATIONAL PETROLEUM CORP.) 03 December 2021 (2021-12-03) entire document | 1-10 |
| A | US 2015012221 A1 (BANSAL REESHIDEV et al.) 08 January 2015 (2015-01-08) entire document | 1-10 |
| A | US 2016061974 A1 (BANSAL REESHIDEV et al.) 03 March 2016 (2016-03-03) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 March 2023** | **13 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/138933**

| Patent document cited in search report | | | Publication date (day/month/year) | Patent family member(s) | | | Publication date (day/month/year) |
|---|---|---|---|---|---|---|---|
| CN | 111781639 | A | 16 October 2020 | None | | | |
| CN | 108345031 | A | 31 July 2018 | None | | | |
| CN | 112255685 | A | 22 January 2021 | None | | | |
| CN | 113740901 | A | 03 December 2021 | None | | | |
| US | 2015012221 | A1 | 08 January 2015 | US | 9702998 | B2 | 11 July 2017 |
| US | 2016061974 | A1 | 03 March 2016 | None | | | |

Form PCT/ISA/210 (patent family annex) (July 2022)

**EP 4 560 361 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210848031